# EUROPÄISCHE PATENTSCHRIFT

(11) **EP 3 933 223 B1**
(45) Veröffentlichungstag und Bekanntmachung des Hinweises auf die Patenterteilung: **19.07.2023**
(21) Anmeldenummer: 21177400.5
(22) Anmeldetag: 02.06.2021
(51) Int. Cl.: F16D 3/26, H02K 7/18, H02K 21/00, F16C 41/00

(54) **GELENKWELLE MIT EINEM GENERATOR ZUR STROMERZEUGUNG**
CARDAN SHAFT WITH A GENERATOR FOR GENERATING ELECTRICITY
ARBRE D'ARTICULATION DOTÉ D'UN GÉNÉRATEUR DESTINÉ À LA PRODUCTION D'ÉLECTRICITÉ

(30) Priorität: 30.06.2020 EP 20183141
(43) Veröffentlichungstag der Anmeldung: 05.01.2022
(73) Patentinhaber: Off-Highway Powertrain Services Germany GmbH, 53797 Lohmar (DE)
(72) Erfinder: Krüger, Max, 53797 Lohmar (DE); Kisla, Timur Mehmet, 53844 Troisdorf (DE); Mildenberger, Mike, 51105 Köln (DE)
(74) Vertreter: Grünecker Patent- und Rechtsanwälte PartG mbB

(56) Entgegenhaltungen:
- DE-A1-102010 038 654
- US-A1- 2014 188 353
- US-A1- 2020 395 814
- US-B2- 10 032 323

## Beschreibung

Die vorliegende Erfindung liegt auf dem Gebiet der Antriebstechnik.

Bei der Übertragung eines Drehmoments in einem Antrieb kommen drehbar gelagerte Wellen zum Einsatz. Mitunter sind diese Wellen als Gelenkwellen ausgebildet und/oder mit einem zusätzlichen Längenausgleich versehen, welcher auch als Schiebestück bezeichnet wird. Solche Gelenkwellen, die mit der vorliegenden Erfindung verbessert werden sollen, kommen auch zwischen Traktoren und davon gezogenen, geschobenen oder getragenen landwirtschaftlichen Arbeitsmaschinen oder in Industriemaschinen zum Einsatz. Zwischen dem Traktor und der Arbeitsmaschine wird in der Regel eine Gelenkwelle mit zwei Kreuzgelenken und einer dazwischenliegenden, mehrteiligen Gelenkwelle, die ein Wellenrohr sowie Segmente für den Längenausgleich verwirklicht, eingesetzt, um die Drehmoment-Übertragung davon unabhängig zu machen, welche Bewegung die Arbeitsmaschinen relativ zu dem Traktor bzw. der Zugmaschine ausführt.

Der vorliegenden Erfindung geht es allgemein um die Verbesserung von Gelenkwellen, insbesondere um die Verbesserung von Gelenkwellen der vorstehend beschriebenen Art, vorzugsweise in einem Antriebsstrang eines Fahrzeugs oder einer Maschine und/oder zwischen einem Fahrzeug und einer Maschine.

Gemäß der vorliegenden Erfindung wird vorgeschlagen, die Gelenkwelle mit einem Generator zur Stromerzeugung zu versehen. Dieser Generator erzeugt Strom, üblicherweise für die Stromversorgung der Gelenkwelle selbst. Denn diese ist oft nicht nur ein Element zur Übertragung eines Drehmomentes; die Gelenkwelle kann vielmehr mit zumindest einem Sensor versehen sein, der das Verhalten der Gelenkwelle erfasst. Dieser Sensor kann ein Temperatursensor, ein Dehnungsmessstreifen, ein Magnetfeldsensor, ein Beschleunigungs- oder ein Lagesensor sein, der die thermische, dynamische oder mechanische Beanspruchung der Gelenkwelle überwacht. Solche Sensoren eignen sich für die frühe Erkennung von sich anbahnendem Verschleiß.

Eine Gelenkwelle mit einem Generator zur Stromerzeugung ist aus US 2014/0188353 A1 bekannt. Die bekannte Gelenkwelle bietet Raum zur Verbesserung.

Der vorliegenden Erfindung liegt die Aufgabe zugrunde, eine verbesserte Gelenkwelle anzugeben.

Zur Lösung dieser Aufgabenstellung gibt die vorliegende Erfindung eine Gelenkwelle mit den Merkmalen von Anspruch 1 an. Sie zeichnet sich dadurch aus, dass der Generator bei einer Rotation der Gelenkwelle mit konstanter Drehzahl durch eine auf einen Kardanfehler der Gelenkwelle beruhende Tangentialbeschleunigung angetrieben wird.

Der Generator ist nach der vorliegenden Erfindung vorzugsweise drehfest an einem Wellenkörper der Gelenkwelle angeordnet. Dabei ist unter einer drehfesten Anordnung eine Anordnung zu verstehen, bei der sich der Generator mit dem Wellenkörper dreht. Als eine drehfeste Befestigung ist entsprechend eine Befestigung zu verstehen, bei der sich das zu befestigende Bauteil gegenüber dem Bauteil, an dem es befestigt ist, nicht verdreht. Diese Montage schließt die Möglichkeit einer Anordnung des Generators am Außenumfang des Wellenkörpers ein. Bevorzugt ist der Generator innerhalb eines Wellenkörpers der Gelenkwelle angeordnet. Die Gelenkwelle ist insofern vorzugsweise mindestens mit einem Hohlraum zur Aufnahme des Generators versehen. Für gewöhnlich weist der den Generator in sich aufnehmende Wellenkörper ein Rohrstück auf oder ist als Rohr ausgebildet. In der Regel ist die Gelenkwelle als Hohlwelle ausgebildet. Der Generator nach der vorliegenden Erfindung ist üblicherweise ein solcher Generator, der für sich und allein durch Anordnung an oder in der drehenden Gelenkwelle funktionsfähig ist. Dies bedeutet, dass üblicherweise keine Funktionselemente des Generators vorgesehen sind, die nicht zusammen mit der Gelenkwelle verwirklicht sind.

Nach einer bevorzugten Weiterbildung der vorliegenden Erfindung ist der Generator als schwingungsfähiges System ausgebildet, das durch den Kardanfehler in einer Eigenfrequenz des schwingungsfähigen Systems anregbar ist. Dabei weist der Generator üblicherweise ein Primärteil und ein Sekundärteil auf, die zur Stromerzeugung durch elektromagnetische Induktion relativ zueinander bewegbar angeordnet sind.

Nach einer weiteren bevorzugten Weiterbildung der vorliegenden Erfindung weist die Gelenkwelle eine in Umfangsrichtung der Gelenkwelle auslenkbare Feder zur Erzeugung einer Relativbewegung zwischen dem Primärteil und dem Sekundärteil des Generators auf. Die Feder ist vorzugsweise nur mit dem Primärteil oder nur mit dem Sekundärteil verbunden. Das nicht mit der Feder verbundene Teil ist vorzugsweise starr mit dem Wellenkörper der Gelenkwelle verbunden und bevorzugt an einem Innenumfang oder einem Außenumfang des Wellenkörpers befestigt. Vorzugsweise ist das Primärteil des Generators innerhalb des Sekundärteils des Generators angeordnet und entlang einer Längserstreckungsrichtung des Sekundärteils beweglich. Dabei wird in dem Generator auf an sich bekannte Weise durch eine Relativbewegung zwischen dem Primär- und dem Sekundärteil ein Strom induziert. Die Längserstreckungsrichtung des Sekundärteils ist mit einem radialen Abstand zu einer Längsachse, üblicherweise der Mittellängsachse, des Wellenkörpers angeordnet. In der Regel verläuft die Längserstreckungsrichtung des Sekundärteils in Drehrichtung, also in Umfangsrichtung der Gelenkwelle. Das Primärteil, das innerhalb des Sekundärteils angeordnet ist, ist in der Regel derart ausgebildet, dass es aufgrund des radialen Abstandes zur Mittellängsachse des Wellenkörpers und der Trägheit seiner Masse durch einen Kardanfehler der Gelenkwelle relativ zu dem Sekundärteil und entlang der Längserstreckungsrichtung des Sekundärteils bewegbar ist.

Durch die bevorzugte Integration des Generators innerhalb des Wellenkörpers der Gelenkwelle kann einerseits ein erhöhter Platzbedarf vermieden werden. Andererseits bietet die Gelenkwelle gleichsam ein Schutzgehäuse für den Generator und die im Betrieb angreifenden Lasten (z.B. Fliehkräfte und Beschleunigung) werden reduziert.

Der Wellenkörper der Gelenkwelle kann insbesondere an einem Zapfenkreuz angeschlossen sein. Das Zapfenkreuz hat üblicherweise vier Zapfen, die jeweils rechtwinklig zueinander üblicherweise in einer Ebene angeordnet sind. An sich gegenüberliegenden Zapfen ist jeweils ein Wellenkörper drehfest, jedoch gelenkig verbunden. Dadurch besteht die Möglichkeit, zwischen den beiden Wellenkörpern ein Drehmoment zu übertragen und gleichzeitig eine gewisse winkelige Lage der beiden Wellenkörper relativ zueinander zuzulassen.

Nach einer bevorzugten Weiterbildung der vorliegenden Erfindung erstrecken sich das Primärteil und das Sekundärteil des Generators in einer Querschnittansicht des Wellenkörpers im Bereich eines äußeren Mantels des Wellenkörpers in einerzu einer Radialrichtung tangentialen Umfangsrichtung. Die Längserstreckungsrichtung entspricht hierbei der Umfangsrichtung der Gelenkwelle. Durch diese Anordnung erfährt der Generator bei einer Drehung der Gelenkwelle aufgrund des Kardanfehlers eine Tangentialbeschleunigung, die zur Anregung einer Relativbewegung zwischen Primärteil und Sekundärteil ausgenutzt wird.

Nach einer weiteren bevorzugten Weiterbildung der vorliegenden Erfindung weist das Sekundärteil eine drehfest mit dem Wellenkörper verbundene gebogene Spule und das Primärteil einen federnd gelagerten und innerhalb der Spule in Umfangsrichtung des Wellenkörpers auslenkbaren Magneten auf. Weiter bevorzugt ist ein Windungsdurchmesser der Spulenwindungen kleiner als ein Innendurchmesser des Wellenkörpers.

Die Windungen der Spule können beispielsweise an der Innenseite des Mantels der Gelenkwelle befestigt sein. Dabei ist die Längserstreckungsrichtung der Spule in der Regel konzentrisch zu den Windungen definiert. Sie ist insbesondere gebogen und beschreibt eine Bahn - für gewöhnlich entlang bzw. entgegen der Drehrichtung der Gelenkwelle - um die Mittellängsachse des Wellenkörpers. Diese Bahn muss nicht geschlossen sein. Sie kann insbesondere die Form eines Kreisbogens um die Mittellängsachse des Wellenkörpers annehmen. Die Form der Bahn schränkt in der Regel die Querschnittsform des Wellenkörpers nicht ein, die eine aus dem Stand der Technik bekannte Querschnittsform sein kann, beispielsweise kreisförmig, oval bzw. zitronenförmig, quadratisch oder sternförmig.

Der Magnet ist vorzugsweise ein Permanentmagnet und kann beispielsweise auf einem entlang der durch die Spule vorgegebenen Bahn gebogenen Träger des Primärteils vorgesehen sein, der von den Windungen der Spule umgeben ist. Der Träger ist üblicherweise über zumindest eine sich in radialer Richtung erstreckende Blattfeder mit einem üblicherweise in der radialen Mitte des Wellenkörpers vorgesehenen Steg verbunden. Dieser Steg ist drehfest mit dem Wellenkörper verbunden. Der Steg kann sich ausgehend von der radialen Mitte des Wellenkörpers plattenförmig erstrecken und eine Breite haben, die dem Innendurchmesser des Wellenkörpers entspricht, sodass der Steg den Wellenkörper auf einem gewissen Längsabschnitt in zwei Hälften unterteilt. Der Steg kann auch als konzentrisch zur Längsachse des Wellenköpers angeordneter Stab ausgebildet sein, der sich radial erstreckende und ggf. in Längsrichtung zu dem Generator versetzt vorgesehene Befestigungsarme zur Befestigung an dem Innenumfang des Wellenkörpers aufweist. Die Blattfedern können bei der bevorzugten Anordnung des Generators innerhalb des Wellenkörpers an einem konzentrisch zu dem Wellenkörper angeordneten und mit einem rohrförmigen Wellenkörper verbundenen Topf versehen sein.

Der Magnet ist vorzugsweise aus mehreren magnetischen Segmenten zusammengesetzt, die beispielsweise auf einer gebogenen Gewindestange als Träger, insbesondere Nylon-Gewindestange, nach Art einer Perlenkette aneinandergereiht und bevorzugt auf die Gewindestange aufgeschraubt sind. Die magnetischen Segmente haben in der Regel einen magnetischen Nordpol und einen magnetischen Südpol und sind mit alternierender Nord-Südpol-Ausrichtung aneinandergereiht. Vorzugsweise definiert der Träger mit zwei an seinen gegenüberliegenden Enden vorgesehenen Federn einen Kreissektor mit dem Befestigungspunt an dem Steg im Mittelpunkt des zugehörigen Kreises.

Nach einer weiteren bevorzugten Weiterbildung der vorliegenden Erfindung erstreckt sich der Generator in der Querschnittansicht des Wellenkörpers im Wesentlichen über den gesamten Umfang des Wellenkörpers. D.h. das Primärteil, insbesondere der Träger des Primärteils, und/oder das Sekundärteil haben eine in Umfangsrichtung im Wesentlichen geschlossene Form, üblicherweise die Form eines Rings. Dadurch kann der gesamte Umfang des Wellenkörpers zur Induzierung eines Stroms genutzt werden.

Nach einer weiteren bevorzugten Weiterbildung der vorliegenden Erfindung sind in der Gelenkwelle mehrere Generatoren vorgesehen, die wie voranstehend beschrieben ausgestaltet sein können. In der Regel ist je einem Generator ein Träger zugeordnet. Die Generatoren können beispielsweise in Längsrichtung der Gelenkwelle versetzt zueinander angeordnet sein. Insbesondere können die Generatoren aber auch an derselben Längsposition in der Gelenkwelle und an unterschiedlichen Positionen in Umfangsrichtung der Gelenkwelle vorgesehen sein. Besonders bevorzugt kann in der Querschnittansicht des Wellenkörpers in je einer Hälfte des Wellenkörpers mindestens ein Generator vorgesehen sein. Primärteil und Sekundärteil sind in diesem Fall entlang eines Kreisbogens angeordnet, wobei die Länge des Kreisbogens einem Halbkreis oder weniger entspricht.

Der Generator ist aufgrund der gefederten Lagerung des Primärteils und der Trägheit seiner Masse als ein schwingungsfähiges System ausgebildet, das durch einen Kardanfehler der Gelenkwelle angeregt werden kann. Eine Eigenfrequenz dieses schwingungsfähigen Systems ist in der Regel von der effektiven Masse des Primärteils, der Gesamtsteifigkeit der Federn sowie von der Dämpfung durch Luftreibung und Rückwirkung durch die Lorentzkraft abhängig. Die Eigenfrequenzen der Primärteile mehrerer Generatoren können voneinander unterschiedlich sein und jeweils einer bestimmten Drehzahl der Gelenkwelle zugeordnet sein. Sie können aber auch gleich sein. Die Abstimmung der Eigenfrequenzen kann dabei mit dem Ziel erfolgen, die Leistung des Generators zu verdoppeln oder über das Drehzahlband zu verteilen.

Der Kardanfehler wird durch die ungleichförmige Anordnung der Wellenkörper hervorgerufen und führt zu einer Anregung des Primärteils mit doppelter Drehfrequenz, d.h. das Primärteil vollführt zwei periodische Bewegungen pro Umdrehung. Aufgrund der drehzahl- und beugewinkelabhängigen Amplitude und der im Vergleich zur Drehfrequenz doppelten Erregerfrequenz, bietet die Nutzung des Kardanfehlers ein hohes Leistungspotential.

Nach einer weiteren bevorzugten Weiterbildung ist der Generator mit einer Logikeinheit gekoppelt, die die elektrische Leistung des Generators zur Bestimmung eines Betriebsparameters der drehbar gelagerten Gelenkwelle auswertet. Der Generator nimmt bei dieser bevorzugten Weiterbildung zusätzlich zur energieerzeugenden Funktion auch die Funktion eines Sensors ein. Die Logik kann in der Nähe des Generators in die Gelenkwelle integriert sein. Dabei kann beispielsweise durch Abgleich zwischen dem Wert der elektrischen Leistung und einer Auswertetabelle festgestellt werden, mit welcher Drehzahl die Gelenkwelle betrieben wird. Dabei kann ungeachtet der speziellen Ausprägung des Generators die erzeugte Energie, in Form von Amplitude und Frequenz, des Generators zur Analyse der Drehbewegung der Gelenkwelle genutzt werden. Auch kann durch Analyse der elektrischen Leistung das Betriebsverhalten der Gelenkwelle analysiert werden. Dabei kann ein planmäßiges Betriebsverhalten analysiert werden, um beispielsweise die Drehzahl oder den Beugewinkel der Gelenkwelle zu ermitteln. Ebenso gut können Störungen im Betriebsverhalten analysiert werden, wie beispielsweise eine Fehlausrichtung oder ein Fehlbetrieb der Gelenkwelle. Auch ist es möglich, die von dem Generator erzeugte Energie zu nutzen, um auf den Kardanfehler zu schließen und mit diesem den Beugewinkel der Einbaulage betragsmäßig zu ermitteln.

Die Logik kann aber vielmehr auch genutzt werden, um den Kardanfehler der Gelenkwelle bzw. die Winkellage zwischen den beiden Wellenkörpern der Gelenkwelle auszuwerten und sich abzeichnende Funktionsstörungen zu ermitteln. Weiter bevorzugt wird die zur Ausführung der Logik benötigte elektrische Energie durch den Generator bereitgestellt.

Bevorzugt speist der Generator eine Sendeeinrichtung mit Strom, die ausgewertete Daten der Logik drahtlos an einen extern vorgesehenen Empfänger übermittelt, der in der Regel mit einem Ausgabegerät zur Darstellung der Daten verbunden ist. Die übermittelten Daten können außerhalb der Gelenkwelle beispielsweise an einem Steuer- oder Bedienstand einer die Gelenkwelle aufweisenden Vorrichtung, beispielsweise einem landwirtschaftlichen Zugfahrzeug, angezeigt werden. Damit ist es möglich, eine fehlerhafte Einstellung der Gelenkwelle zu analysieren und ggf. zu korrigieren. Ungleiche Beugewinkel an beiden Enden einer Gelenkwelle, die zu einer übermäßigen Beanspruchung der Gelenkwelle im Betrieb führen können, können durch Anpassung der Lage der beiden, an beiden Enden der Gelenkwelle vorgesehenen Antriebselemente korrigiert werden. So kann beispielsweise ein über die Gelenkwelle angetriebenes landwirtschaftliches Gerät im Hinblick auf ein schonendes Betriebsverhalten der Gelenkwelle optimiert relativ zu dem landwirtschaftlichen Zugfahrzeug, dessen Zapfwelle mit der Gelenkwelle verbunden sein kann, ausgerichtet werden. Aber auch andere Verwendungen sind denkbar. So kann das Ausgabegerät vorzugsweise einen sich anbahnenden Verschleiß der Gelenkwelle signalisieren und damit notwendige Wartungsarbeiten anzeigen.

Aus Gründen einer einfachen Montage ist der Generator vorzugsweise in einem Gehäuse vorgesehen, das in einen Hohlraum der drehbar gelagerten Gelenkwelle eingeführt, vorzugsweise eingepresst oder eingeklebt ist. Das Gehäuse ist in der Regel als Hülse ausgebildet, die eine an die Kontur der Gelenkwelle, welchen den Hohlraum nach außen begrenzt, angepasste Mantelfläche hat. An der Innenseite dieser Mantelfläche sind für gewöhnlich die Windungen der Spule drehfest befestigt. Üblicherweise hat das Gehäuse des Weiteren eine konzentrisch in der Hülse angeordnete und drehfest mit derselben verbundene Trägerbasis mit einem entlang der Mittellängsachse der Gelenkwelle bzw. des Gehäuses verlaufenden Steg. Die Trägerbasis kann beispielsweise hantelförmig sein, wobei der Steg zwei gegenüber dem Steg breitere Enden der Trägerbasis miteinander verbindet, welche wiederum mit der Hülse verbunden sind oder einteilig mit derselben hergestellt sind. Die Hülse und die Trägerbasis können insgesamt einteilig hergestellt sein. An dem Steg ist vorzugsweise in der obig beschriebenen Art und Weise das Primärteil des Generators mittels mindestens einer sich in radialer Richtung erstreckenden Feder befestigt. Das Gehäuse mit dem drehfest darin vorgesehenen Generator kann für sich erfindungswesentlich sein.

Die vorliegende Erfindung enthält indes auch eine verfahrensmäßige Lehre zum Betrieb einer drehbar gelagerten Gelenkwelle mit einem Wellenkörper und einem drehfest an dem Wellenkörper vorgesehenen Generator an, wobei sich ein Primärteil des Generators relativ zu einem Sekundärteil des Generators bewegt und in einer zu einer Radialrichtung tangentialen Umfangsrichtung des Wellenkörpers hin- und herschwingt, wenn sich die Gelenkwelle dreht. Das Primärteil und das Sekundärteil können wie zuvor beschrieben ausgestaltet sein. Das Primärteil ist vorzugsweise in Drehrichtung und entgegen der Drehrichtung der Gelenkwelle durch jeweils ein biegeelastisches Bauteil schwingungsfähig gelagert. Das Sekundärteil ist hingegen vorzugsweise fest mit dem Wellenkörper verbunden. Daher wird das Primärteil durch eine Drehung oder eine Vibration der Gelenkwelle zu einer Schwingung angeregt, die aufgrund der gefederten Lagerung des Primärteils eine periodische Bewegung in und entgegen der Drehrichtung der Gelenkwelle beinhaltet. Eine an der Gelenkwelle aufgrund des Kardanfehlers angreifende Tangentialbeschleunigung wird so zur Anregung einer Relativbewegung zwischen dem Primärteil und dem Sekundärteil genutzt, wodurch ein elektrischer Strom induziert wird, selbst wenn die Drehzahl der Gelenkwelle im Wesentlichen konstant bleibt.

Die Gelenkwelle wird vorzugsweise mit einer Drehzahl rotiert, die das Primärteil durch die Rotation oder durch den Kardanfehler in einer Eigenfrequenz anregt. So lässt sich der Generator in einem resonanten Bereich und damit mit hoher Effizienz anregen. Die Eigenfrequenz ist dabei üblicherweise durch geeignete Wahl der sie beeinflussenden Parameter auf diejenige Drehzahl angepasst, mit der die Gelenkwelle für gewöhnlich im normalen Betriebsablauf betrieben wird. Diese Drehzahl liegt meist innerhalb eines weiten Drehzahlbereichs. So sind besonders bevorzugt mehrere Generatoren mit unterschiedlichen Eigenfrequenzen vorgesehen, sodass ein weiter Bereich an Drehzahlen von 50 U/min bis 6000 U/min, bevorzugt von 500 U/min bis 1000 U/min abgedeckt werden kann.

Wird eine Gelenkwelle mit einer festen Drehzahl betrieben, schlägt die vorliegende Erfindung zur Leistungsmaximierung die Integration eines umfänglich geschlossenen Generators vor, dessen Eigenfrequenz auf die feste Drehzahl bzw. den damit einhergehenden Kardanfehler abgestimmt ist.

Vorzugsweise ist der Generator mit einer Logik gekoppelt, welche die elektrische Leistung des Generators zur Bestimmung eines Betriebsparameters der drehbar gelagerten Gelenkwelle auswertet. Weiter bevorzugt kommuniziert die Logik mit einer Steuerung, die steuerungsmäßig mit einem an oder in der Gelenkwelle vorgesehenen Sensor gekoppelt ist, der durch den Generator bestromt wird. Dabei ist die Steuerung bevorzugt derart angepasst eingerichtet, dass die Logik in Abhängigkeit mindestens eines Betriebsparameters ein- und/oder ausgeschaltet wird. Dadurch lässt sich eine Messung des Sensors auf relevante Betriebsbedingungen einschränken und ggf. Strom sparen.

In einem nebengeordneten Aspekt gibt die vorliegende Erfindung einen Antriebsstrang eines Fahrzeugs oder einer Maschine mit einer erfindungsgemäßen Gelenkwelle an. Vorzugsweise ist die Gelenkwelle nach zumindest einer der obig diskutierten bevorzugten Weiterbildungen ausgestaltet.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Fig. 1: eine schematische Darstellung einer Querschnittansicht einer drehbar gelagerten Gelenkwelle eines ersten Ausführungsbeispiels, und
- Fig. 2: eine schematische Darstellung einer Querschnittansicht einer drehbar gelagerten Gelenkwelle eines zweiten Ausführungsbeispiels.

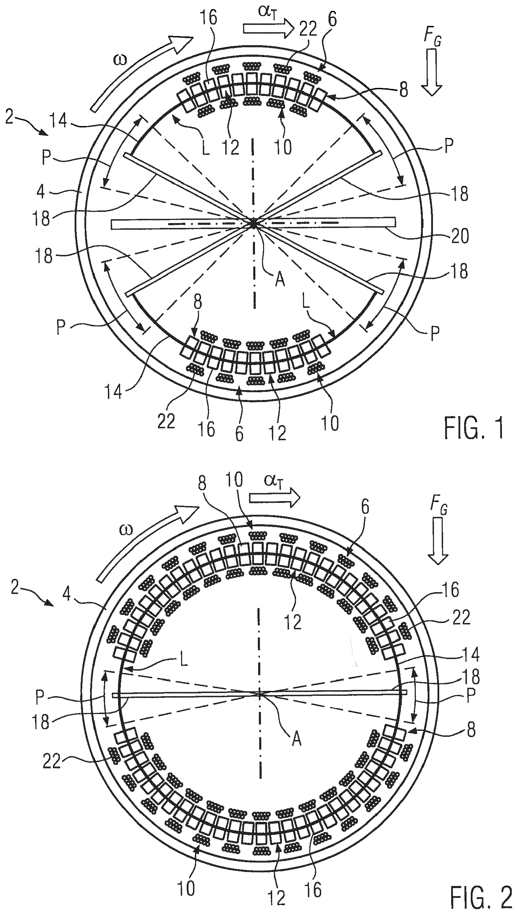

Die Figuren 1 und 2 stellen Ausführungsbeispiele schematisch und in einer Querschnittansicht dar. Die drehbar gelagerte Gelenkwelle ist in diesen Ausführungsbeispielen als Hohlwelle mit einem Wellenkörper 2, der einen zylindrischen Mantel 4 hat, ausgebildet. Sie ist in horizontaler Lage vorgesehen; d.h. die Gelenkwelle erstreckt sich axial in der Horizontalen. Entsprechend ist die Gewichtskraft F_{G} mit einem nach unten gerichteten Pfeil dargestellt. Der Wellenkörper 2 ist um seine Mittellängsachse A drehbar. Sie wird nachfolgend Drehachse A genannt.

Bei einer Rotation der Gelenkwelle um die Drehachse A mit einer Winkelgeschwindigkeit ω, die in Umfangsrichtung des Wellenkörpers 2 zeigt, erfährt ein Massenpunkt auf dem Mantel 4 eine Tangentialbeschleunigung α_{T}, die betragsmäßig das Produkt aus dem Abstand des Massenpunkts von der Drehachse A und der zeitlichen Ableitung der Winkelgeschwindigkeit ω ist. Die Tangentialbeschleunigung α_{T} steht senkrecht zur Radialrichtung, die von der Mantelfläche des Mantels 4 in Richtung der Drehachse A zeigt.

Bei dem in Figur 1 dargestellten Ausführungsbeispiel sind zwei Generatoren 6 vorgesehen, wobei einer der Generatoren 6 in der oberen Hälfte des Wellenkörpers 2 und der andere Generator 6 in der unteren Hälfte des Wellenkörpers 2 vorgesehen ist. Der Generator 6 hat ein Primärteil 8 und ein Sekundärteil 10, wobei das Primärteil 8 einen Permanentmagneten 12 aufweist, der an einer gebogenen Nylonstange als Träger 14 befestigt ist. Der Träger 14 erstreckt sich entlang der Längserstreckungsrichtung L des Sekundärteils 10.

Der Permanentmagnet 12 setzt sich aus einzelnen ringförmigen magnetischen Segmenten 16 zusammen, die in der Figur nur schematisch durch Rechtecke dargestellt sind und abwechselnd mit unterschiedlicher Nordpol-Südpol-Ausrichtung auf der Nylonstange aneinandergereiht sind. Der Träger 14 ist an seinen Enden mit je einer Blattfeder 18 gekoppelt, die sich in radialer Richtung erstreckt und an der Drehachse A mit einem Steg 20 einer Trägerbasis verbunden ist. Die Trägerbasis ist drehfest mit dem Mantel 4 des Wellenkörpers 2 verbunden. Die Trägerbasis und/oder der Träger 14 sollten aus dem gleichen Werkstoff, insbesondere Stahl gebildet sein. Nicht-magnetischer Stahl, beispielsweise austenitischer Stahl oder Aluminium sind zur Vermeidung einer magnetischen Wechselwirkung zu dem Primär- bzw. Sekundärteil 10, 12 zu bevorzugen.

Das Primärteil 8 ist aufgrund der Biegeelastizität der Blattfedern 18 und der Trägheit seiner Masse ein schwingungsfähiges System, das durch eine Rotation der Gelenkwelle und insbesondere einen Kardanfehler der Gelenkwelle angeregt werden kann. Das heißt, dass das Primärteil 8 in eine oszillierende Bewegung versetzt werden kann, die sich aus einer in Richtung der Drehrichtung der Gelenkwelle und einer entgegen der Drehrichtung der Gelenkwelle geführten Bewegung zusammensetzt. So entsteht eine Relativbewegung zwischen dem Primärteil 8 und dem Sekundärteil 10, das eine fest mit dem Mantel 4 des Wellenkörpers 2 verbundene Spule 22 aufweist. Die Spule 22 ist konzentrisch um den Träger 14 gewunden. Die in Umfangsrichtung äußeren Windungen der Spule 22 sind an dem Mantel 4 befestigt.

Die Auslenkungsamplitude des Primärteils 8 in Umfangsrichtung entspricht vorliegend der Hälfte des Doppelpfeils P. Bevorzugt sind die Eigenfrequenzen der Primärteile 8 der Generatoren 6 unterschiedlich.

Das in Figur 2 dargestellte zweite Ausführungsbeispiel unterscheidet sich von dem ersten Ausführungsbeispiel dadurch, dass nur ein Generator 6 bzw. nur eine Nylonstange als Träger 14 vorgesehen ist, die zu einem im Wesentlichen umfänglich geschlossenen Ring gebogen ist, und dass sich der Permanentmagnet 12 und die Spule 22 sich im Wesentlichen über die gesamte Umfangsrichtung des Mantels 4 erstrecken. Nylon ist lediglich ein beispielhafter Werkstoff zur Herstellung des Trägers. Dieser Träger sollte aus einem unmagnetischen und biegsamen Material gebildet sein. Die Ausbildung des Trägers 15 als Gewindestange dient der axialen Fixierung und Vorspannung der einzelnen ringförmigen Segmente 16 auf dem Träger 14. Die Blattfedern 18 sind gegenüberliegend und entlang einer Linie angeordnet, welche den Wellenkörper 2 in eine obere und eine untere Hälfte unterteilt. Alternativ können zur Erhöhung der Quersteifigkeit des Primärteils auch mehr als zwei Blattfedern beispielsweise drei bis fünf Blattfedern sternförmig angeordnet werden. Ein umfänglicher Spalt in der Spule 22 ist geradeso gewählt, dass die Blattfedern 18 bei einer Auslenkung des Primärteils 8 die Spulen 22 nicht berühren.

### Bezugszeichenliste

- 2: Wellenkörper
- 4: Mantel
- 6: Generator
- 8: Primärteil
- 10: Sekundärteil
- 12: Permanentmagnet
- 14: Träger
- 16: ringförmiges Segment
- 18: Blattfeder
- 20: Steg der Trägerbasis
- 22: Spule
- A: Drehachse der Gelenkwelle
- L: Längserstreckungsrichtung des Sekundärteils
- P: doppelte Auslenkungsamplitude
- F_{G}: Gewichtskraft
- ω: Winkelgeschwindigkeit
- α_{T}: Tangentialbeschleunigung

## Patentansprüche

1. Gelenkwelle (2) mit einem Generator (6) zur Stromerzeugung, **dadurch gekennzeichnet, dass**
der Generator bei einer Rotation der Gelenkwelle mit konstanter Drehzahl durch eine auf einen Kardanfehler der Gelenkwelle beruhende Tangentialbeschleunigung angetrieben wird.

2. Gelenkwelle nach Anspruch 1, **dadurch gekennzeichnet, dass** der Generator als schwingungsfähiges System ausgebildet ist und durch den Kardanfehler in einer Eigenfrequenz des schwingungsfähigen Systems anregbar ist.

3. Gelenkwelle nach Anspruch 2, **gekennzeichnet durch** eine in Umfangsrichtung der Gelenkwelle auslenkbare Feder (18) zur Erzeugung einer Relativbewegung zwischen einem Primärteil und einem Sekundärteil des Generators.

4. Gelenkwelle nach Anspruch 3, **dadurch gekennzeichnet, dass** von dem Primärteil (8) und dem Sekundärteil (10) des Generators zumindest eines drehfest an der Gelenkwelle befestigt ist.

5. Gelenkwelle nach einem der Ansprüche 1 bis 4, **dadurch gekennzeichnet, dass** der Generator im Inneren der Gelenkwelle vorgesehen ist.

6. Gelenkwelle nach einem der Ansprüche 1 bis 4, **dadurch gekennzeichnet, dass** der Generator außen an der Gelenkwelle vorgesehen ist.

7. Antriebsstrang eines Fahrzeugs oder einer Maschine, **gekennzeichnet durch** eine Gelenkwelle nach einem der vorherigen Ansprüche.

## Claims

1. Universal shaft (2) with a generator (6) for generating electricity, **characterized in that** said generator is driven by a tangential acceleration acting upon the universal shaft due to a cardan error when the universal shaft rotates at a constant rotational speed.

2. Universal shaft according to claim 1, **characterized in that** said generator is configured as a vibratory system and can be excited by the cardan error in a natural frequency of said vibratory system.

3. Universal shaft according to claim 2, **characterized by** a spring (18) that is deflectable in the circumferential direction of said universal shaft for generating a relative motion between a primary part and a secondary part of said generator.

4. Universal shaft according to claim 3, **characterized in that** at least one of said primary part (8) and said secondary part (10) of said generator is attached to said universal shaft in a rotationally fixed manner.

5. Universal shaft according to one of the claims 1 to 4, **characterized in that** said generator is provided in the interior of said universal shaft.

6. Universal shaft according to one of the claims 1 to 4, **characterized in that** said generator is provided on the exterior of said universal shaft.

7. Drive train of a vehicle or a machine, **characterized by** an universal shaft according to one of the preceding claims.

## Revendications

1. Arbre de transmission (2) comprenant un générateur (6) pour la production d'électricité, **caractérisé en ce que**
le générateur est entraîné lors d'une rotation de l'arbre de transmission à vitesse constante par une accélération tangentielle basée sur une erreur de cardan de l'arbre de transmission.

2. Arbre de transmission selon la revendication 1, **caractérisé en ce que** le générateur est conçu sous la forme d'un système oscillant et peut être excité par l'erreur de cardan à une fréquence propre du système oscillant.

3. Arbre de transmission selon la revendication 2, **caractérisé par** un ressort (18) pouvant être dévié dans la direction circonférentielle de l'arbre de transmission pour produire un déplacement relatif entre une partie primaire et une partie secondaire du générateur.

4. Arbre de transmission selon la revendication 3, **caractérisé en ce qu'**au moins l'une de la partie primaire (8) et de la partie secondaire (10) du générateur est fixée de manière solidaire en rotation à l'arbre de transmission.

5. Arbre de transmission selon l'une quelconque des revendications 1 à 4, **caractérisé en ce que** le générateur est prévu à l'intérieur de l'arbre de transmission.

6. Arbre de transmission selon l'une quelconque des revendications 1 à 4, **caractérisé en ce que** le générateur est prévu à l'extérieur de l'arbre de transmission.

7. Groupe motopropulseur d'un véhicule ou d'une machine, **caractérisé par** un arbre de transmission selon l'une quelconque des revendications précédentes.
